# EUROPEAN PATENT APPLICATION

(11) **EP 4 652 833 A1**
(43) Date of publication of application: **26.11.2025**
(21) Application number: 24177514.7
(22) Date of filing: 23.05.2024
(51) Int. Cl.: A01G 9/24

(54) **GREENHOUSE, CLIMATE CONTROL SYSTEM FOR GREENHOUSE AND METHOD OF CONTROLLING CLIMATE IN GREENHOUSE**

(71) Applicant: Finn Growers Oy, 151 40 Lahti (FI)
(72) Inventor: Kariste, Oskari, 15900 Lahti (FI); Jordas, Robert, 07840 Lindkoski (FI); Pehkonen, Jukka, 70110 Kuopio (FI)
(74) Representative: Wilenius, Jami Juhani

(57) **Abstract**

A climate control system for a greenhouse having a reservoir (10) for water (50), two or more water pipes (20) having a plurality of fixtures (22) for spraying the water (50), pumping means (13), a chiller unit (30), a droplet separator (12), and multiple output blowers (16). The water pipes (20) are separated from a cultivation area with a partial wall (24) being open at the top. The system defines an air passage from the cultivation area to above the fixtures (22), downward among the sprays of water cooling the air flow and condensing moisture. The air passage continues through the droplet separator (12) into an enclosure (14) and to the output blowers (16) blowing the cooled air into the cultivation area.

## Description

### FIELD OF THE INVENTION

The invention relates to a greenhouse, a climate control system for a greenhouse and a method of controlling climate in a greenhouse, all of which have a thermal storage or rely on a thermal storage for saving energy.

### PRIOR ART

A greenhouse can be operated as an open system or a closed system depending on how the climate within the greenhouse is controlled. A greenhouse with the open system is interacting with the outside of the greenhouse, often by ventilating the greenhouse through ventilation doors or blowers removing hot and moist air from inside the greenhouse and bringing in cooler and dryer air from outside the greenhouse.

A greenhouse with the closed system does not exchange gases to the same extent, and the greenhouse is essentially closed. A climate control system is used for lowering the temperature and humidity of the air inside the greenhouse. A desired carbon dioxide concentration can easily be maintained, since the air inside the greenhouse circulates in the closed system and is not constantly ventilated out from the greenhouse. Rather, only the heat is transferred outside the greenhouse and dissipated into the outside air. A problem in this is that the highest cooling capacity is required during daytime when outside air is warm and the cooling consumes a lot of energy. The cooling system has to be oversized to provide satisfactory cooling during the warmest few hours, and backup systems may have to be used. The highest cooling capacity is required exactly at the time when the cooling requires most work due to the high outside temperature. This requires a lot of electric power, which is also oftentimes expensive during these peak hours, and usage restrictions may apply.

### BRIEF DESCRIPTION OF THE INVENTION

An object of the invention is a climate control system which alleviates the drawbacks of the prior art. The object can be achieved with the climate control system of claim 1. Advantageous embodiments have been presented in claims 2 to 10.

### BRIEF DESCRIPTION OF THE FIGURES

The invention is now described in more detail in connection with preferred embodiments, with reference to the accompanying drawings, of which:
Fig. 1 shows a section view of a climate control system according to an embodiment in connection with a greenhouse;
Fig. 2 shows a section view of a climate control system with vertical blowers according to an embodiment in connection with a greenhouse;
Fig. 3 shows a section view of a climate control system with horizontal blowers according to an embodiment in connection with a greenhouse;
Fig. 4 shows a section view of a climate control system with vertical and horizontal blowers according to an embodiment in connection with a greenhouse; and
Fig. 5 illustrates air flow in a greenhouse having a climate control system according to an embodiment of the invention.

### DETAILED DESCRIPTION OF THE INVENTION

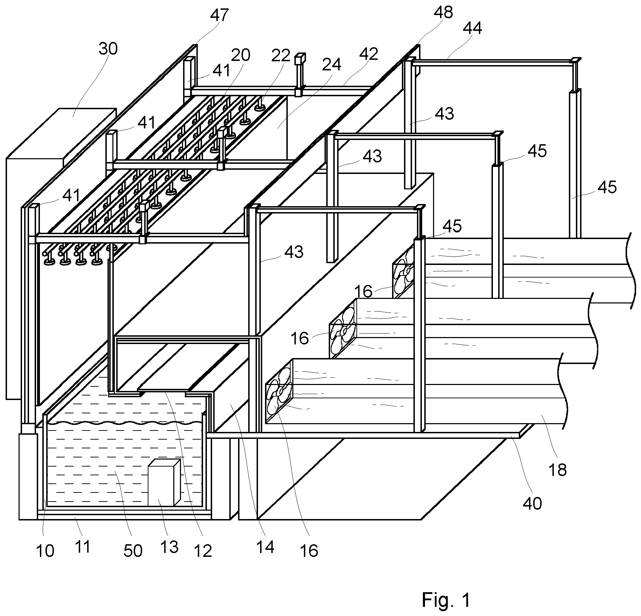

The first aspect of the invention is a climate control system for a greenhouse. Figure 1 shows an embodiment of such a climate control system for a greenhouse. The climate control system can be installed inside an existing greenhouse or as an extension to an existing greenhouse. The extension preferably shares one wall with the existing greenhouse and that wall is then at least partially opened to join the extension and the existing greenhouse and to allow air to flow between the two. Obviously, a newly built greenhouse can also be designed to include the climate control system of the first aspect of the invention.

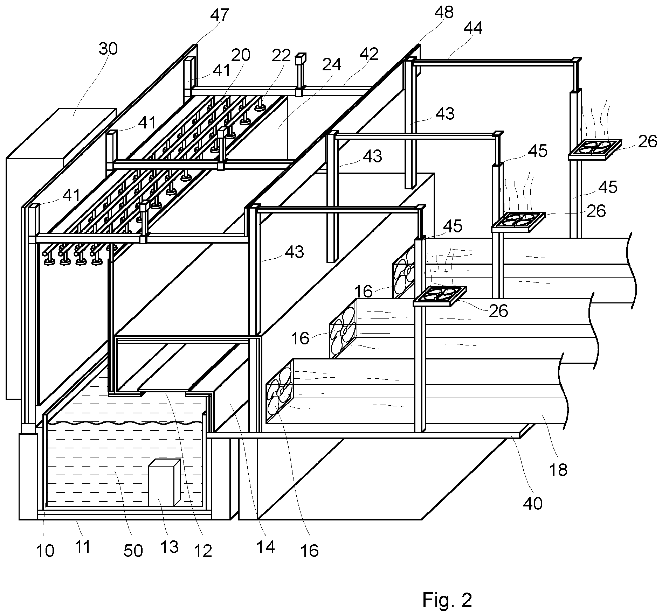

In Figure 1, as well as in Figures 2 to 5, the climate control system has been installed into an extension of a greenhouse. A partial outer wall 48 was an outer wall of the greenhouse, supported by a first row of greenhouse columns 43. A cultivation area of the greenhouse, in the embodiment of Figure 1, is on the righthand side of the first row of greenhouse columns 43, i.e. towards a second row of greenhouse columns 45, and a climate control system area is on the left-hand side of the first row of greenhouse columns 43, i.e. towards a row of extension columns 41. The cultivation area of the greenhouse extends beyond what is illustrated in Figures 1 to 5 with repeated rows of greenhouse columns after the second row of greenhouse columns 45. Any directions given within the present disclosure refer to directions in Figures 1 to 5. Furthermore, "down" and "downward" refer to the direction of the force of gravity and correspondingly "up" and "upward" refer to the direction opposite to the force of gravity.

The climate control system area lies between an outer wall 47, supported by the row of extension columns 41, and the partial outer wall 48 and its vertical extension. The climate control system area is separate from the cultivation area of the greenhouse, which means that preferably no plants are cultivated in the climate control system area, because any plants in said area could disrupt air flow, and because conditions within the climate control area could be detrimental to any plants cultivated there. The climate control system, as well as the extension in this case, preferably spans over the entire length of the greenhouse, but the climate control area can also be longer or shorter than the greenhouse or the partial outer wall 48 of the greenhouse. The dimensioning and specifications of the climate control system may vary depending on available space, outdoor climate, required cooling capacity, and other such variables.

The climate control system comprises a reservoir 10 for water 50 that is used as a thermal energy storage and for controlling the climate inside the greenhouse. The water is used for cooling the air inside the greenhouse by transferring heat from the air into the water. The more water there is in the reservoir, the fewer cooling cycles are needed for maintaining a sufficiently low temperature of the water. In terms of the cultivation area of the greenhouse, the volume of the reservoir 10 is preferably at least one cubic meter per 50 square meters of cultivation area of the greenhouse and more preferably at least one cubic meter per 20 square meters of cultivation area of the greenhouse. In terms of volume of the greenhouse, the volume of the reservoir 10 is preferably at least one cubic meter per 250 cubic meters of volume of the greenhouse and more preferably at least one cubic meter per 100 cubic meters of volume of the greenhouse. The volume of the greenhouse refers to the air volume of the greenhouse. For example, a greenhouse having a cultivation area of 4000 square meters and volume of 25000 cubic meters would preferably have a reservoir with a volume of at least 80 cubic meters or more preferably at least 200 cubic meters based on the cultivation area. The same greenhouse would preferably have a reservoir with a volume of at least 100 cubic meters or more preferably at least 250 cubic meters based on the greenhouse volume. In this case, 80 cubic meters of reservoir volume would preferably be the bare minimum and 250 cubic meters would preferably be the smallest recommended reservoir volume. The dimensioning of the reservoir also depends heavily on the ambient climate in the area where the greenhouse is located, the plants cultivated in the greenhouse as well as technical factors that may or may not limit the size of the reservoir. The reservoir 10 is preferably thermally insulated from the ground with an insulation layer 11 underneath the reservoir 10. The insulation layer can comprise expanded polystyrene, polyurethane or the like.

The climate control system has a chiller unit 30 for transferring heat from the water 50 in the reservoir to outside the climate control system and most often to outside the greenhouse as well. In some cases, the heat from the chiller unit 30 can be used for heating the air inside the greenhouse, for example, during nighttime or cold weather. The chiller unit 30 is in thermal communication with the water in the reservoir. The thermal connection can be implemented with tubes or pipes allowing the water to flow from the reservoir to the chiller unit and from the chiller unit to the reservoir. The thermal connection can also mean, for example, one or more loops, preferably closed loops, which extend into the water in the reservoir and in which one or more loops the chiller unit circulates fluid, such as water or refrigerant, which is cooled by the chiller unit. The chiller unit 30 can be placed either inside the greenhouse or outside the greenhouse. Regardless of where the chiller unit is located, the climate control system area can include the area covered by the chiller unit.

The climate control system further comprises two or more water pipes 20 above the reservoir 10. The water pipes 20 preferably extend over the whole length of the reservoir 10 or at least substantially over the whole length of the reservoir. The water pipes are preferably mutually parallel or substantially parallel. The water pipes can be suspended from ceiling structures or beams 42 spanning between the row of extension columns 41 and the first row of greenhouse columns 43. The number of water pipes has a direct impact on the cooling capacity of the climate control system, and the more cooling capacity is required, the more water pipes are preferably used. The water pipes are preferably relatively large in diameter to reduce flow losses and to allow for a relatively low water pressure in the water pipes. The water pipes are preferably at least 100 mm in diameter and more preferably at least 150 mm in diameter or at least 200 mm in diameter. In this context, two long water pipes connected at one end, e.g. with a U-shaped section, are considered as two water pipes even though the structure technically constitutes a single pipe having two parallel sections and a bend therebetween. In other words, the number of water pipes can be determined by the number of parallel water pipe sections in the context of the present disclosure. In the embodiment of Figure 1, there are four water pipes.

Each of the water pipes comprises a plurality of fixtures 22, i.e. plumbing fixtures, through which the water is sprayed, sprinkled or released from the water pipes. The distance between adjacent fixtures can be, for example, at most 500 mm, preferably at most 400 mm and more preferably at most 300 mm. The fixtures 22 may comprise one or more nozzles, apertures or perforations, as in a regular household showerhead, for the water to pass through and to spread the water to cover a larger area after exiting the fixtures. The fixtures preferably point downwards from the water pipes, but they could also be slightly inclined from a downward direction. The relatively large diameter of the water pipes ensures that water flow rate and flow pattern through all the fixtures 22 of the water pipes 20 are substantially similar. The fixtures 22 for spraying the water are preferably configured to spray the water in such a way that water sprays of adjacent fixtures of the same water pipe intersect mid-air. This will create a sort of a wall or a curtain of flowing water, thereby increasing contact area between the water and the air compared to sparsely spaced and/or dense water sprays. The vertical distance between said fixtures 22 and the highest intended water level in the reservoir 10 is preferably at least three meters and more preferably at least four meters.

Climate control systems of the prior art are oftentimes placed in the cultivation area between rows of plants. This takes up cultivation space and may cause unintentional spraying of water on the plants due to being in close proximity. The water may damage or contaminate the plants and expose them to mold and diseases. To eliminate such an unintentional spraying of water, the climate control system of the present disclosure has a partial wall 24 separating the water pipes 20 and the fixtures 22 from the cultivation area of the greenhouse. The partial wall 24 is open at the top, as shown in Figures 1 to 5, thereby allowing air to flow over the partial wall. The water pipes and the fixtures are preferably located between the partial wall 24 and the outer wall 47. The fixtures 22 for spraying water are preferably directly above the reservoir 10 and configured to spray the water into the reservoir. This structure forms a sort of a corridor delimited by the partial wall 24 and the outer wall 47 at the sides, the fixtures 22 for spraying water at the top and surface of the water 50 in the reservoir 10 at the bottom. When water is sprayed from the fixtures, the corridor is densely filled with falling water drops while still maintaining an air passage through the corridor but at the same time ensuring a high transfer rate of thermal energy between water and air in the corridor. In case the fixtures 22 are not directly above the reservoir 10, the water sprayed from the fixtures is preferably drained back into the reservoir using a sloped floor or some other suitable solution.

The climate control system also comprises pumping means 13 for pumping water from the reservoir 10 into the water pipes 20 and through the fixtures 22 for spraying water. The pumping means 13 can comprise a water pump and piping or tubing connecting the water outlet of the water pump to the water pipes. The pumping means are well-known to a person skilled in the art. Any suitable pumping means can be used.

The climate control system comprises multiple output blowers 16 for distributing cooled air from the climate control system to the greenhouse, preferably especially to the cultivation area of the greenhouse. The air blown by the output blowers 16 can be distributed more evenly with known ventilation solutions, such as perforated air tubes 18 or ventilation tubes with perforations increasing in number and/or area the farther away they are from the blowers in order to provide a substantially constant flow rate of output air across the whole length of the tube. Any other known ventilation solutions for said purpose can be used. Also, ventilation solutions providing not a constant flow rate over the whole length but different flow rates for various sections can be used when desired. The multiple output blowers 16 preferably face the cultivation area of the greenhouse and are located near the boundary between the cultivation area and the climate control area, i.e. at about the first row of greenhouse columns 43 facing towards the second row of greenhouse columns 45. The output blowers 16 are preferably at the floor level, near the floor level or not more than 1000 mm from the floor 40, more preferably not more than 500 mm from the floor 40 measured from the lowest point of said blowers 16.

Said multiple output blowers 16 are preferably attached to an enclosure 14 residing at the climate control area. The enclosure can be partially on top of the reservoir as shown in Figures 1 to 5. The enclosure has output openings for the output blowers so that the output blowers cover the output openings and any substantial air flow from the enclosure into the greenhouse takes place through the output blowers. Said enclosure 14 is preferably a dampening enclosure which reduces whirling and flowing of the air. The dampening can be achieved by preventing the air from flowing in a straight line from an input opening into the output openings, i.e. forcing the air flow to change direction between the input opening and the output opening. A droplet separator 12 is preferably installed at the input opening of the enclosure to remove mist and small droplets from the air flow. The droplet separator can also be located elsewhere in the climate control system, but in the direction of the air flow, the location of the droplet separator has to be after the air has flowed through the sprayed water but before the air is blown into the greenhouse. The droplet separator 12 is preferably located directly above the reservoir 10, and more preferably installed on the bottom of the enclosure 14 directly above the reservoir, and even more preferably installed in horizontal position on the bottom of the enclosure 14 directly above the reservoir.

Now referring to the embodiment of Figure 2, which is very similar to the embodiment shown in Figure 1 with the exception of some extra blowers. The climate control system of the embodiment of Figure 2 comprises multiple vertical blowers 26 in the cultivation area of the greenhouse for blowing air upwards within the greenhouse. The term "vertical blowers" refers to the direction of the air flow generated by the blowers, so the vertical blowers generate a vertical air flow. As the multiple output blowers 16 blow the cooled air from the enclosure 14 into the cultivation area, the cooled air tends to remain near the floor 40 as it is denser than warm air in the greenhouse. Rising temperature of the freshly distributed cooled air and pressure differences caused by the multiple output blowers 16 will over time raise and mix the cooled air with the warmer air in the greenhouse. The multiple vertical blowers 26 in the cultivation area greatly expedite this mixing of freshly distributed cooled air into the warmer greenhouse air. This keeps the temperature more stable along the height of the greenhouse and prevents the air from forming layers of air at different temperatures which is difficult to control. The multiple vertical blowers 26 can be attached to greenhouse columns or suspended from ceiling structures or beams 44 spanning between adjacent rows of greenhouse columns 43, 45. The vertical blowers are preferably at a height of halfway between the floor 40 and the fixtures 22 of the water pipes 20 or higher than that.

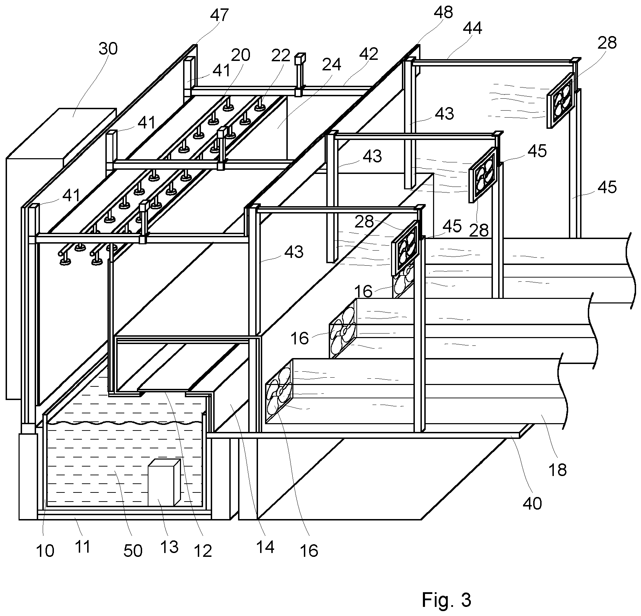

Now referring to the embodiment of Figure 3, which is again very similar to the embodiment shown in Figure 1 with the exception of some extra blowers and only two water pipes 20 instead of four in Figure 1. The fewer water pipes indicate a smaller cooling requirement than in the embodiment of Figure 1. In addition, the climate control system of the embodiment of Figure 3 comprises multiple horizontal blowers 28 in the cultivation area of the greenhouse for blowing air towards the water pipes 20 and the fixtures 22. The term "horizontal blowers" refers to the direction of the air flow generated by the blowers, so the horizontal blowers generate a horizontal air flow. As the multiple output blowers 16 blow the cooled air from the enclosure 14 into the cultivation area, the cooled air tends to remain near the floor 40 as it is denser than warm air in the greenhouse. Rising temperature of the freshly distributed cooled air and pressure differences caused by the multiple output blowers 16 will over time raise and mix the cooled air with the warmer air in the greenhouse. The multiple horizontal blowers 28 in the cultivation area greatly expedite this mixing of freshly distributed cooled air into the warmer greenhouse air by actively blowing air at about the height of the water pipes 20 or fixtures 22. This facilitates the circulation of air and keeps the temperature more stable along the height of the greenhouse. The multiple horizontal blowers 28 can be attached to greenhouse columns or suspended from ceiling structures or beams 44 spanning between adjacent rows of greenhouse columns 43, 45. The horizontal blowers are preferably at the height of the fixtures 22 or within one meter of the height of the fixtures.

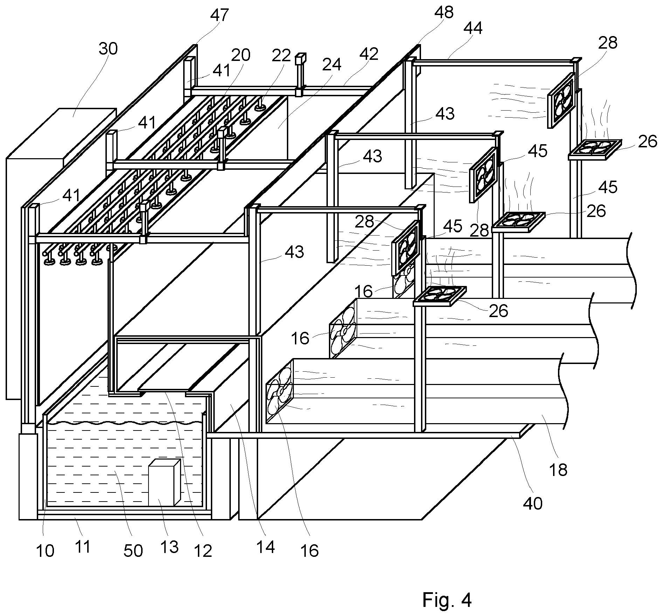

Now referring to the embodiment of Figure 4, which is similar to the embodiment shown in Figure 2 with the addition of the horizontal blowers 28 as described with reference to Figure 3. Having both the vertical blowers 26 and the horizontal blowers 28 in the cultivation area facilitates the circulation of air and prevents the air from layering due to temperature differences.

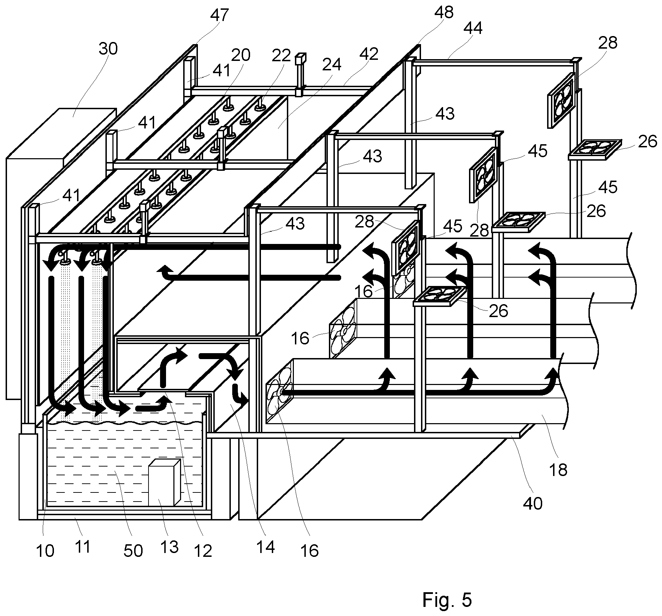

Figure 5 illustrates the air flow within a greenhouse having a climate control system according to an embodiment of the first aspect of the invention. The climate control system of the embodiment of Figure 5 is similar to the embodiment of Figure 4 except there are only two water pipes 20 in Figure 5 compared to four water pipes in Figure 4. The arrows in Figure 5 denote the air flow inside the greenhouse.

The greenhouse has an air circulation pattern as shown in Figure 5. The climate control system defines an air passage from the cultivation area of the greenhouse to above said plurality of fixtures 22. The partial wall 24 forces the air flow over the partial wall that is open at the top. The air passage then continues downward among and in between the sprays of water cooling the air flow and condensing moisture. Near the water surface of the reservoir, the air passage turns parallel to the surface of the water and then continues through the droplet separator 12 into the enclosure 14. Preferably, the droplet separator is in horizontal position, i.e. parallel with the surface of the water in the reservoir. The air passage preferably passes the droplet separator 12 in an upward direction and into the enclosure 14. The cooled air is distributed from the enclosure into the cultivation area of the greenhouse by the multiple output blowers 16. This lowers the air pressure inside the enclosure and maintains the circulation. The air passage continues inside and through the perforated air tubes 18 which distribute the cooled air evenly into the cultivation area of the greenhouse. The vertical blowers 26 suction the cold air near the floor 40 and blow it upwards, thereby mixing the air and preventing layering of the air. The horizontal blowers 28 at the height of the water pipes or fixtures near the ceiling blow the air again towards the partial wall 24, and the cycle repeats.

As shown with the embodiment of Figure 5, the climate control system can be configured to operate as a closed system with the greenhouse essentially without gas exchange with outside the system. If any gas exchange is needed, air from outside the greenhouse can be introduced, for example, with an opening through the outer wall 47 into the space between the fixtures 22 and the reservoir 10 in a controllable manner. As the cold-water sprays from the fixtures cool the air flowing in the same space, moisture from the air condensates and ends up in the reservoir. This can amount to several cubic meters of water a day, and any excess water in the reservoir can be used for watering the plants in the cultivation area of the greenhouse. Thus, not only the air is circulated in a closed system but also the water. Alternatively, the excess water can also be drained from the reservoir.

A second aspect of the invention is a greenhouse having the climate control system of the first aspect of the invention. We refer herein to the description of embodiments of Figures 1 to 5 that were already described in the context of a greenhouse having the climate control system. As described already, the climate control system is preferably in an area separate of the cultivation area of the greenhouse. The climate control system can be installed inside an existing greenhouse or as an extension to an existing greenhouse. The extension preferably shares one wall with the existing greenhouse and that wall is then at least partially opened to join the extension and the existing greenhouse and to allow air to flow between the two.

In an embodiment, the greenhouse comprises multiple vertical blowers 26 in the cultivation area of the greenhouse for blowing air upwards within the greenhouse. In another embodiment, the greenhouse comprises multiple horizontal blowers 28 in the cultivation area of the greenhouse for blowing air towards the water pipes 20 and the fixtures 22. In yet another embodiment, the greenhouse comprises both multiple vertical blowers 26 and multiple horizontal blowers 28 in the cultivation area of the greenhouse.

A third aspect of the invention is a method of controlling the climate of a greenhouse with the climate control system of the first aspect of the invention. The method comprises steps of driving the chiller unit 30 intermittently to cool the water 50 of the reservoir 10 and cooling the greenhouse air continuously for at least four hours, preferably for at least six hours, by pumping the water with the pumping means into the water pipes 20 and spraying the water through the fittings 22 and driving the output blowers 16, wherein the chiller unit 30 is not driven during said greenhouse air cooling step. In an embodiment, the chiller unit 30 is driven at most 50% of the time. Preferably, the chiller unit is driven during the hours when the temperature outside the greenhouse is the lowest, which saves energy. For example, the cooling cycle can begin one hour after sunset and continue until one hour from sunrise, if the desired temperature of the water in the reservoir is not reached earlier. Another way to drive the chiller unit 30 is to monitor the price of electricity, for example, the spot price or night-time price, and drive the chiller unit during periods having the lowest price of electricity. The water in the reservoir is a thermal storage with essentially zero losses, and it is possible to cool down the water so much during the night that the chiller unit does not need to be driven during the hours when the outside temperature is high or the price of electricity is high. The volume of the reservoir is preferably dimensioned for this purpose, as well as the cooling capacity of the chiller unit. When the volume of the reservoir is large enough to cover the cooling needs during the warmest time of the day, only the pumping means and the blowers need to be operated with electric energy that might be costly or scarce during the peak hours. The power consumption during the peak hours is very low, and the total power consumption is lower due to the reservoir, allowing the use of the chiller unit when the least amount of work is required for cooling.

To a skilled person in the art, it is obvious that the basic idea of the invention can be implemented in various ways, as technology and materials develop. The invention and its embodiments are therefore not limited to only the examples presented above; rather they may vary within the scope of the claims.

## Claims

1. A climate control system for a greenhouse, the climate control system comprising:
a reservoir (10) for water (50),
two or more water pipes (20) above the reservoir (10), where each of said water pipes comprises a plurality of fixtures (22) for spraying the water (50),
pumping means (13) for pumping water from the reservoir (10) into the water pipes (20) and through said fixtures (22),
a chiller unit (30) for transferring heat from the water (50) in the reservoir (10) to outside the climate control system,
a droplet separator (12), and
multiple output blowers (16) for distributing cooled air from the climate control system to the greenhouse,
the climate control system being **characterized in that** the water pipes (20) and the fixtures (22) for spraying water are separated from a cultivation area of the greenhouse with a partial wall (24) being open at the top, wherein the climate control system defines an air passage from the cultivation area of the greenhouse to above said plurality of fixtures (22), downward among and in between the sprays of water cooling the air flow and condensing moisture, then through the droplet separator (12) into an enclosure (14), from where the cooled air is distributed by said multiple output blowers (16) into the cultivation area of the greenhouse.

2. The climate control system of claim 1, wherein said air passage passes the droplet separator (12) in an upward direction.

3. The climate control system of claim 1 or 2, wherein said enclosure (14) is a dampening enclosure for reducing whirling and flowing of the air.

4. The climate control system of any one of claims 1 to 4, wherein said fixtures (22) for spraying the water (50) are directly above said reservoir (10) and the fixtures (22) are configured to spray the water into the reservoir.

5. The climate control system of any one of claims 1 to 4, wherein said fixtures (22) for spraying the water (50) are configured to spray the water in such a way that water sprays of adjacent fixtures of the same water pipe (20) intersect mid-air.

6. The climate control system of any one of claims 1 to 5, wherein the vertical distance between said fixtures (22) and the highest intended water level in the reservoir (10) is at least four meters.

7. The climate control system of any one of claims 1 to 6, wherein the climate control system is configured to operate as a closed system with the greenhouse essentially without gas exchange with outside the system.

8. The climate control system of any one of claims 1 to 7, wherein the volume of the reservoir (10) is at least one cubic meter per each 50 square meters of cultivation area of the greenhouse.

9. The climate control system of any one of claims 1 to 8, wherein the climate control system comprises multiple vertical blowers (26) in the cultivation area of the greenhouse for blowing air upwards within the greenhouse.

10. The climate control system of any one of claims 1 to 9, wherein the climate control system comprises multiple horizontal blowers (28) in the cultivation area of the greenhouse for blowing air towards the water pipes (20) and the fixtures (22).

11. A greenhouse having the climate control system of any one of claims 1 to 8.

12. The greenhouse of claim 11, wherein the climate control system is situated in an area separate of the cultivation area of the greenhouse.

13. The greenhouse of claim 11 or 12, wherein the volume of the reservoir (10) is preferably at least one cubic meter per each 250 cubic meters of volume of the greenhouse.

14. A method of controlling climate of a greenhouse with the climate control system of any one of claims 1 to 10, the method comprising the steps of:
driving the chiller unit (30) intermittently to cool the water (50) of the reservoir (10), and
cooling the greenhouse air continuously for at least four hours by pumping the water with the pumping means into the water pipes (20) and spraying the water through the fittings (22) and driving the output blowers (16), wherein the chiller unit (30) is not driven during said greenhouse air cooling step.

15. The method of claim 14, wherein the chiller unit (30) is driven at most 50% of the time.
